## Europäisches Patentamt
## European Patent Office
## Office européen des brevets

(19)

(11) Veröffentlichungsnummer: **0 033 072**
**A1**

(12)
# EUROPÄISCHE PATENTANMELDUNG

(21) Anmeldenummer: **81100121.3**

(22) Anmeldetag: **09.01.81**

(51) Int. Cl.³: **B 25 G 3/18**

(30) Priorität: **23.01.80 DE 8001690 U**

(43) Veröffentlichungstag der Anmeldung:
**05.08.81 Patentblatt 81/31**

(84) Benannte Vertragsstaaten:
**DE FR NL SE**

(71) Anmelder: **SIEMENS AKTIENGESELLSCHAFT Berlin und München**
**Postfach 22 02 61**
**D-8000 München 22(DE)**

(72) Erfinder: **Kess, Herbert**
**Schulstrasse 11**
**D-8740 Bad Neustadt/Saale(DE)**

(54) **Gerät mit einer Befestigungsanordnung für eine Führungsstange.**

(57) Gerät mit einer Befestigungsanordnung für eine Führungsstange, die in eine entsprechende, am Gerät vorgesehene Bohrung einsteckbar ist. Um die Führungsstange ohne Zuhilfenahme eines Werkzeuges an dem Gerät befestigen zu können, wird vorgeschlagen, am Gerät (1) im Bereich der Bohrung (2) einen mit einem Betätigungshebel (5) versehenen Exzenter (6) anzuordnen, der mit der Führungsstange (3) in Klemmverbindung bringbar ist.

FIG 1

EP 0 033 072 A1

SIEMENS AKTIENGESELLSCHAFT          Unser Zeichen
Berlin und München                  VPA 80 P 3008 E

Gerät mit einer Befestigungsanordnung für eine
Führungsstange

Die Erfindung bezieht sich auf ein Gerät mit einer Befestigungsanordnung für eine Führungsstange, die in eine entsprechende, am Gerät vorgesehene Bohrung einsteckbar ist.

Durch das DE-GM 78 37 444 ist ein Staubsauger bekannt, bei dem in der Bohrung für das Führungsrohr ein Klemmkörper angeordnet ist. Nach dem Einstecken des Führungsrohres wird der Klemmkörper mittels Schrauben gegen das Führungsrohr gepreßt. Hierzu werden die Schrauben durch entsprechende Bohrungen in der Wand des Führungsrohres hindurchgeführt und in Gewindelöcher des Klemmkörpers eingeschraubt. Bei diesem bekannten Staubsauger ist das Befestigen des Führungsrohres somit relativ umständlich und kann nicht ohne Werkzeug ausgeführt werden. Außerdem eignet sich diese Befestigungsart nur für rohrförmige Führungsstangen.

Der Erfindung liegt die Aufgabe zugrunde, ein Gerät mit einer Befestigungsanordnung für eine Führungsstange so auszubilden, daß die Führungsstange ohne Werkzeug in einfacher Weise an dem Gerät befestigt werden kann.

Die Lösung der gestellten Aufgabe gelingt nach der Erfindurch dadurch, daß am Gerät im Bereich der Bohrung ein mit einem Betätigungshebel versehener Exzenter angeordnet ist, der mit der Führungsstange in Klemmverbindung bringbar ist.

Eine formschlüssige Befestigung wird dadurch erreicht, daß an der Führungsstange eine Vertiefung vorgesehen ist, in die der Exzenter in seiner Klemmstellung eingreift. Nach einer weiteren Ausgestaltung der Erfindung ergibt sich

M1 2 Ca / 26.09.1980

eine sichere Befestigung der Führungsstange auch dadurch, daß in der Wand der Bohrung eine federnde Zunge vorgesehen und durch den Exzenter an die Führungsstange anpreßbar ist.

Anhand eines in der Zeichnung dargestellten Ausführungsbeispiels wird der Anmeldungsgegenstand nachfolgend näher beschrieben. Es zeigt

Fig. 1 einen Detailschnitt eines Gerätes, bei dessen Befestigungsanordnung ein Exzenter in eine an der Führungsstange ausgebildete Nut eingreift,

Fig. 2 einen Detailschnitt eines Gerätes, bei dessen Befestigungsanordnung eine in der Bohrung angeordnete Zunge mittels des Exzenters an die Führungsstange anpreßbar ist.

In beiden Figuren ist mit 1 jeweils das Gehäuse eines Gerätes, beispielsweise eines Staubsaugers, bezeichnet. An diesem Gehäuse ist eine Bohrung 2 ausgebildet, in welche jeweils eine Führungsstange 3 bzw. 4 eingesteckt ist. Am Gehäuse ist im Bereich der Bohrung 2 ein mit einem Betätigungshebel 5 versehener Exzenter 6 verschwenkbar befestigt. Der Exzenter 6 ist jeweils in der Befestigungsstellung dargestellt. Durch gestrichelte Linien ist die Exzenterstellung angedeutet, in der die Führungsstange jeweils vom Exzenter 6 freigegeben ist.

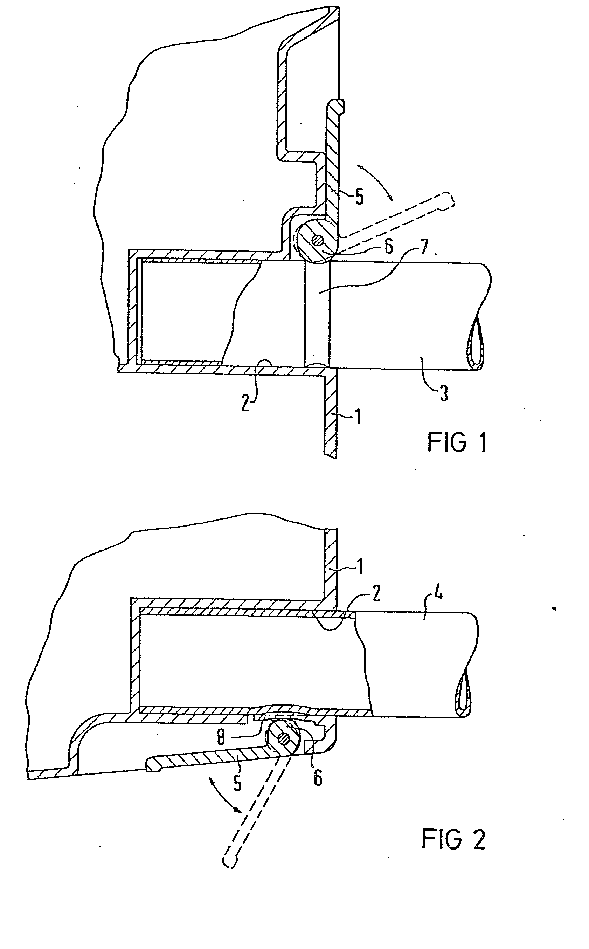

Bei dem Ausführungsbeispiel nach Fig. 1 weist die Führungsstange 3 eine als umlaufende Nut ausgebildete Vertiefung 7 auf, in die sich der Exzenter 6 mit seiner größten Ausladung einlegt. Hierdurch wird eine formschlüssige Befestigung der Führungsstange 3 erreicht. Bei der Darstellung nach Fig. 2 ist an der Wand der Bohrung 2 eine federnde Zunge 8 vorgesehen, welche durch den Exzenter 6 gegen die Führungsstange 4 gepreßt wird. Die Führungsstange 4 wird somit durch Klemmwirkung in der Bohrung 2 gehalten.

Das Lösen der Führungsstange 3 bzw. 4 erfolgt jeweils durch ein Verschwenken des Betätigungshebels 5 in die durch gestrichelte Linien angedeutete Stellung.


3 Patentansprüche
2 Figuren

Patentansprüche

1. Gerät mit einer Befestigungsanordnung für eine Führungsstange, die in eine entsprechende, am Gerät vorgesehene
Bohrung einsteckbar ist, d a d u r c h   g e k e n n -
z e i c h n e t , daß am Gerät im Bereich der Bohrung (2)
ein mit einem Betätigungshebel (5) versehener Exzenter (6)
angeordnet ist, der mit der Führungsstange (3 bzw. 4) in
Klemmverbindung bringbar ist.

2. Gerät mit einer Befestigungsanordnung nach Anspruch 1,
d a d u r c h   g e k e n n z e i c h n e t , daß an der
Führungsstange (3) eine Vertiefung (7) vorgesehen ist, in
die der Exzenter (6) in seiner Klemmstellung eingreift.

3. Gerät mit einer Befestigungsanordnung nach Anspruch 1,
d r  d u r c h   g e k e n n z e i c h n e t , daß in der
Wand der Bohrung (2) eine federnde Zunge (8) vorgesehen
und durch den Exzenter (6) an die Führungsstange (4) anpreßbar ist.

0033072

1/1          80 P 3008

FIG 1

FIG 2

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - U - 1 660 720 (M. GEHENDGES O.H.G.) <br> * Ansprüche 1, 2; Fig. 1 * <br> -- | 1 |
| | US - A - 2 849 249 (A.E. FRIDOLPH) <br> * Spalte 5, Zeilen 12 bis 38; <br> Fig. 2 bis 4 * <br> -- | 1,3 |
| | CH - A - 391 387 (W. WÜSTER) <br> * Seite 1, Zeilen 9 bis 35; Fig. 1, 6 * <br> ---- | 1,3 |

### KLASSIFIKATION DER ANMELDUNG (Int. Cl.³)

B 25 G 3/18

### RECHERCHIERTE SACHGEBIETE (Int. Cl.³)

A 45 D 1/00
A 47 L 5/28
A 47 L 13/42
B 25 G 3/00
F 16 B 2/18
F 16 B 7/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 14-04-1981 | HOFFMANN |

EPA form 1503.1 06.78